# FASCICULE DE BREVET EUROPEEN

(11) **EP 1 134 820 B1**
(45) Date de publication et mention de la délivrance du brevet: **11.11.2015**
(21) Numéro de dépôt: 01400537.5
(22) Date de dépôt: 01.03.2001
(51) Int. Cl.: H01M 2/26, H01M 2/22, B23K 26/00

(54) **Procédé de raccordement des lamelles d'une électrode à une borne d'un générateur électrochimique et générateur en résultant.**
Verfahren zum Verbinden von Elektrodenfahnen mit einem Pol eines elektrochemischen Generators und Generator
Method of joining the electrode lugs with a terminal of an electrochemical generator and generator

(30) Priorité: 16.03.2000 FR 0003369
(43) Date de publication de la demande: 19.09.2001
(73) Titulaire: SAFT, 93170 Bagnolet (FR)
(72) Inventeur: Ligeois, Dominique, 33450 St. Loubes (FR); Chaillet, Alexandre, 3300 Bordeaux (FR); Borel, Philippe, 33000 Bordeux (FR)
(74) Mandataire: Hirsch & Associés

(56) Documents cités:
- EP-A- 0 771 040
- US-A- 4 322 484
- US-A- 5 227 267
- US-A- 5 707 758
- PATENT ABSTRACTS OF JAPAN vol. 016, no. 459 (E-1268), 24 septembre 1992 (1992-09-24) -& JP 04 162351 A (TOSHIBA BATTERY CO LTD), 5 juin 1992 (1992-06-05)
- PATENT ABSTRACTS OF JAPAN vol. 1997, no. 03, 31 mars 1997 (1997-03-31) -& JP 08 293299 A (MATSUSHITA ELECTRIC IND CO LTD), 5 novembre 1996 (1996-11-05)
- PATENT ABSTRACTS OF JAPAN vol. 014, no. 009 (E-870), 10 janvier 1990 (1990-01-10) -& JP 01 255164 A (NATL SPACE DEV AGENCY JAPAN;OTHERS: 01), 12 octobre 1989 (1989-10-12)

## Description

La présente invention concerne un procédé de raccordement des lamelles provenant d'une électrode à une borne d'un générateur électrochimique, en particulier, d'un générateur électrochimique rechargeable au lithium à électrodes cylindriques spiralées. L'invention concerne aussi un générateur électrochimique susceptible d'être obtenu par ce procédé.

Un générateur électrochimique à électrodes spiralées comprend des électrodes sous forme de rubans enroulés autour d'un mandrin central ou bobinot pour former un cylindre. Chaque électrode comprend un collecteur de courant métallique qui supporte sur au moins une de ses faces la matière active de l'électrode. Elle est connectée électriquement à une borne de sortie de courant qui assure la continuité électrique entre l'électrode et l'application à laquelle le générateur est associé.

La borne traverse le conteneur du générateur : la partie située à l'extérieur du conteneur reçoit les connexions extérieures, la partie située à l'intérieur est reliée aux électrodes. Cette borne peut être solidaire ou rapportée au conteneur. Il existe plusieurs façons de raccorder électriquement une électrode à une sortie de courant. L'une de ces façons est l'utilisation d'une ou plusieurs lamelles conductrices ou minces bandes métalliques : une extrémité de chacune des lamelles est soudée sur le bord du collecteur et l'autre extrémité est soudée à la partie interne de la borne située à l'intérieur du conteneur.

FR-A-2752089 décrit un procédé pour raccorder les lamelles provenant d'une électrode d'un tel générateur électrochimique à une borne rapportée sur son conteneur. La partie intérieure au conteneur de la borne comprend un épaulement cylindrique. Le procédé consiste à rassembler les lamelles autour de la périphérie de l'épaulement par une pièce cylindrique animée d'un mouvement concentrique vers la périphérie. Puis, les lamelles sont fixées sur la périphérie en utilisant notamment une bague ou en recourant à une soudure électrique ou par ultrasons.

Ce procédé a pour inconvénient d'induire un temps de fabrication long. En outre, la soudure électrique ou la soudure aux ultrasons n'est pas de qualité satisfaisante lorsqu'il s'agit de souder par exemple des lamelles en aluminium sur des bornes en aluminium. Le soudage électrique est délicat à mettre en oeuvre en particulier lorsque plusieurs lamelles se chevauchent car il en résulte un cumul des résistances de contact entre les différentes lamelles et la borne qui est tel que le soudage électrique devient impossible ou du moins procure une soudure de qualité médiocre ne réalisant plus de manière fiable le raccordement mécanique et électrique des lamelles à la borne. Le soudage par ultrasons a pour inconvénient de ne pas permettre de souder successivement les lamelles à la borne car les vibrations engendrées lors du soudage d'une lamelle donnée détériorent ou détruisent la soudure de la lamelle précédente.

La présente invention a pour but d'éliminer les inconvénients de l'art antérieur.

A cette fin, la présente invention propose un procédé de raccordement de lamelles d'une électrode à une borne d'un générateur électrochimique selon la revendication 1.

Les lamelles ont chacune de préférence une épaisseur comprise entre 50µm et 80µm. La rondelle a de préférence une épaisseur comprise entre 0,5mm et 1mm.

Selon un mode de réalisation, la borne, les lamelles et la rondelle sont réalisées en aluminium. En variante, la borne et les lamelles sont réalisées chacune dans un matériau choisi parmi le cuivre, le cuivre nickelé et le nickel, et la rondelle est réalisée en nickel ou en cuivre nickelé.

Selon un autre aspect, l'invention propose un générateur électrochimique selon la revendication 6. Les lamelles ont chacune de préférence une épaisseur comprise entre 50µm et 80µm. La rondelle a de préférence une épaisseur comprise entre 0,5mm et 1mm.

Selon un mode de réalisation, la borne, les lamelles et la rondelle sont réalisées en aluminium. En variante, la borne et les lamelles sont réalisées chacun dans un matériau choisi parmi le cuivre, le cuivre nickelé et le nickel et la rondelle est réalisée en nickel ou en cuivre nickelé.

D'autres caractéristiques et avantages de l'invention apparaîtront à la lecture de la description qui suit d'un mode de réalisation préféré de l'invention, donnée à titre d'exemple et en référence au dessin annexé dans lequel :
- la figure 1 représente schématiquement les lamelles provenant d'une électrode avant leur raccordement à une borne de sortie de courant selon un premier mode de réalisation non couvert par l'invention;
- la figure 2 représente schématiquement une étape du raccordement selon le premier mode de réalisation ;
- la figure 3 représente schématiquement une autre étape du raccordement selon le premier mode de réalisation ;
- la figure 4 représente schématiquement une étape du raccordement des lamelles provenant d'une électrode à une borne de sortie de courant selon un deuxième mode de réalisation non couvert par l'invention:
- la figure 5 représente schématiquement une autre étape du raccordement selon le deuxième mode de réalisation ;
- la figure 6 représente schématiquement une étape du raccordement des lamelles d'une électrode spiralée à une borne de sortie de courant selon un mode de réalisation de l'invention ;
- la figure 7 représente schématiquement une autre étape du raccordement selon le mode de réalisation de l'invention ;
- la figure 8 représente schématiquement encore une autre étape du raccordement selon le mode de réalisation de l'invention.

L'invention propose de raccorder les lamelles provenant d'une électrode à une borne d'un générateur électrochimique en pinçant ces lamelles entre un élément de maintien et la borne pour plaquer et maintenir en position les lamelles contre la borne pendant le soudage des lamelles sur la borne en recourant à un soudage au laser par transparence au travers de la rondelle . Le soudage au laser par transparence consiste à attaquer avec le faisceau laser un point de la surface extérieure de l'élément de la rondelle pour faire fondre progressivement l'épaisseur de matière de la rondelle au niveau de ce point. Lorsque l'épaisseur de matière de la rondelle est en fusion, le faisceau poursuit son attaque sur la ou les lamelles sous-jacentes pour faire fondre l'épaisseur de matière de ces lamelles, puis enfin la matière sous-jacente de la borne au moins à un niveau superficiel. Après refroidissement, il résulte donc une soudure maintenant ensemble l la rondelle, les lamelles et la borne. De façon avantageuse, le faisceau laser est déplacé progressivement, de préférence de façon continue, le long d'une ligne de soudage sur la surface extérieure de la rondelle pour souder l'ensemble des lamelles sur la borne suivant cette ligne de soudure, la vitesse de déplacement étant choisie pour obtenir la soudure effective de la rondelle, des lamelles et de la borne tout au long de la ligne de soudure.

Les modes de réalisation qui suivent sont décrits pour un générateur électrochimique rechargeable de forme cylindrique, en particulier, du type au lithium. Ce générateur comprend typiquement un faisceau électrochimique incluant une électrode positive et une électrode négative ainsi que deux séparateurs. Les deux électrodes sont enroulées ou spiralées ensemble avec les séparateurs intercalés entre eux pour former un cylindre. Chaque électrode est reliée à une sortie de courant correspondante par le biais de lamelles métalliques.

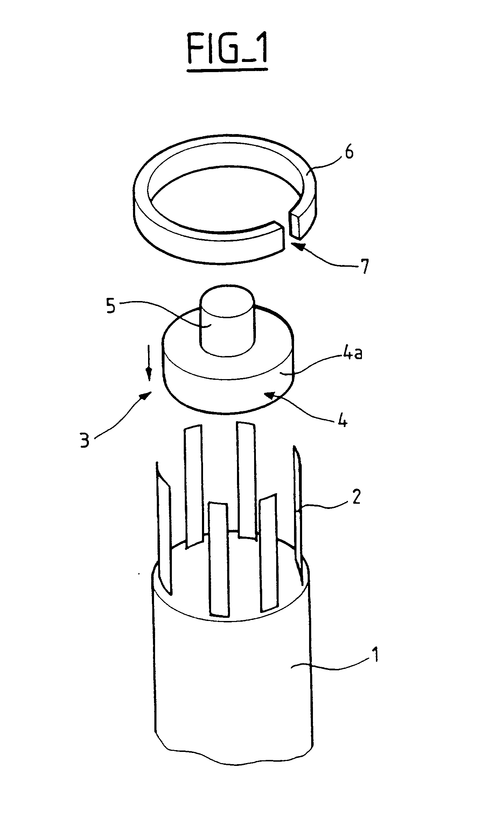

Un premier mode de réalisation présenté à titre d'explication de l'invention mais non couvert par l'invention va être décrit en relation avec les figures 1, 2 et 3.

La figure 1 représente une électrode spiralée 1 reliée à une pluralité de lamelles métalliques 2 avant leur raccordement à une borne 3 de sortie de courant. Les lamelles 2 servent à relier électriquement l'électrode 1 à la borne 3. Les lamelles 2 ont généralement toutes la même épaisseur. Le nombre de lamelles 2 représentées n'est pas significatif et dépend dans les faits de la puissance du générateur électrochimique. La borne 3 comprend un plot de connexion 5 qui sera habituellement disposé du côté extérieur au boîtier du générateur, non représenté, et une partie de raccordement 4 qui sera habituellement située à l'intérieur du boîtier du générateur. Le plot de connexion 5 reçoit la connexion de l'application extérieure à laquelle le générateur est associé au moyen, par exemple, d'un filetage non représenté. La partie de raccordement 4 a une forme de cylindre de révolution sur une face duquel est agencé le plot de connexion 5. Le plot de connexion 5 ne dépasse pas radialement hors de la circonférence 4a de la partie de raccordement 4. Le raccordement des lamelles 2 à la borne 3 est réalisé à l'aide d'un élément de maintien se présentant sous la forme d'une bague cylindrique fendue 6, de la manière suivante.

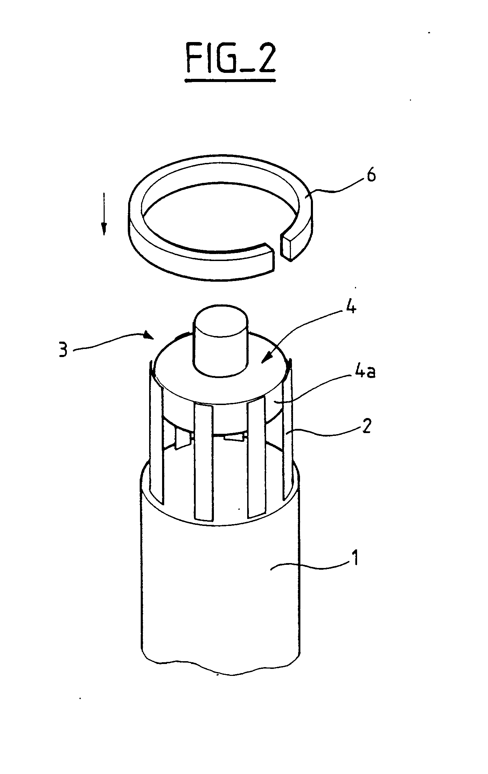

Dans un premier temps, la partie de raccordement 4 est disposée entre les lamelles 2 de façon à ce que les lamelles 2 s'étendent autour de la circonférence 4a de la partie de raccordement 4, comme l'illustre la figure 2. Le plot de connexion 5 est évidemment situé du côté opposé à l'électrode 1. La borne 3 pourra par exemple être maintenue par un outil serrant le plot de connexion 5.

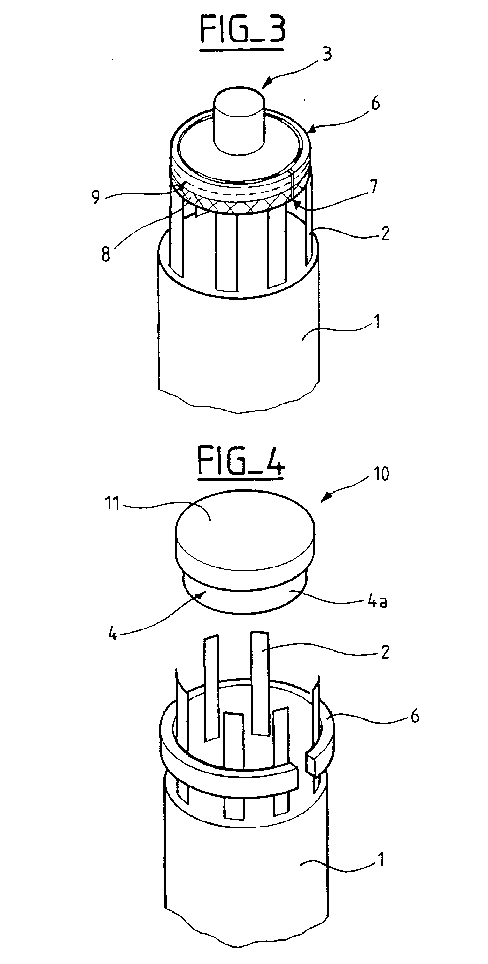

Dans un deuxième temps, la bague 6 est placée autour de la circonférence 4a de la partie de raccordement 4 et des lamelles 2. Les lamelles 2 sont donc disposées entre la circonférence 4a de la partie de raccordement 4 et la bague 6. Pour cela, la bague 6, lorsqu'elle n'est pas sollicitée, a un diamètre intérieur supérieur au diamètre de la partie de raccordement 4 et suffisant pour pouvoir entourer la conférence 4a de la partie de raccordement 4 avec les lamelles 2 disposées autour de celle-ci. La bague 6 est ensuite serrée sur la circonférence 4a de la partie de raccordement 4 à l'aide par exemple d'une pince à serrage concentrique, non représentée. En conséquence, les lamelles 2 sont pincées entre la circonférence 4a de la partie de raccordement 4 et la bague 6 comme l'illustre la figure 3. L'homme du métier choisira le matériau et les dimensions de la bague 6 de façon à présenter une élasticité suffisante pour permettre ce serrage. De même, il choisira la largeur de la fente 7 de la bague 6 pour permettre la diminution de diamètre suffisante de la bague 6 lors du serrage de celle-ci. Le serrage est effectué seulement sur une partie 8 de la largeur de la circonférence extérieure de la bague 6 qui est représentée en hachuré sur la figure 3.

En variante, la bague 6, lorsqu'elle n'est pas sollicitée, peut avoir un diamètre intérieur inférieur au diamètre de la partie de raccordement 4. La mise en place de la bague 6 se fera alors en augmentant son diamètre avec un outil écarteur adapté afin de permettre de passer la bague 6 autour de la circonférence 4a de la partie de raccordement 4 et des lamelles 2. Ensuite, on cesse de solliciter la bague 6 pour qu'elle enserre la circonférence de la partie de raccordement 4 de sorte à pincer les lamelles entre elles. Pour cela, l'homme du métier choisira le matériau et les dimensions au repos de la bague 6 pour procurer une élasticité suffisante pour permettre l'augmentation de diamètre et pour obtenir un effort de pincement des lamelles entre la partie de raccordement 4 et la bague 6 suffisant. La forme de la bague 6 peut être aménagée pour faciliter sa prise par l'outil écarteur par exemple à la façon d'un classique anneau élastique pour arbre.

Après la mise en place et le serrage de la bague 6 autour de la partie de raccordement 4, l'on procède au soudage des lamelles 2 sur la circonférence 4a de la partie de raccordement 4. Le soudage est effectué au laser par transparence au travers de la bague 6 le long d'une ligne de soudage 9 faisant le tour de la circonférence extérieure de la bague 6 et qui est représentée en pointillés sur la figure 3. Durant l'opération de soudage, on continue à maintenir la bague 6 serrée sur la circonférence 4a de la partie de raccordement 4 avec la pince à serrage concentrique, du moins dans le cas où la bague 6 n'est pas enserrée par elle-même sur la partie de raccordement 4 du fait de son élasticité comme décrit précédemment en variante. De ce fait, la ligne de soudage 9 se situe sur la circonférence extérieure de la bague 6 en dehors de la zone 8 sur laquelle s'effectue le serrage. Le serrage de la bague 6 sur la partie de raccordement 4 sert à plaquer et maintenir les lamelles 2 contre la partie de raccordement 4 pour permettre le soudage fiable des lamelles 2 sur la partie de raccordement 4. Le soudage au laser se fait par transparence, c'est-à-dire que le faisceau laser attaque en un point de la ligne de soudage 9 sur la circonférence extérieure de la bague 6 et fait progressivement fondre d'abord l'épaisseur de matière de la bague 6, puis la matière des lamelles 2 et enfin au moins la matière en surface de la partie de raccordement 4, pour souder ensemble ces différents éléments. Le faisceau laser parcourt progressivement la ligne de soudage 9 pour réaliser la soudure tout le long de celle-ci. Lorsque le soudage est fini et que la soudure résultante est suffisamment refroidie, l'on peut enlever la pince à serrage concentrique puisque la soudure assure le maintien en place définitif de la bague 6 et des lamelles 2 sur la partie de raccordement 4.

L'homme du métier choisira les matériaux des lamelles 2, de la borne 3 et de la bague 6, ainsi qu'une épaisseur de matière adéquate des lamelles 2 et de la bague 6 dans la zone de la ligne de soudage 9 pour permettre le soudage au laser par transparence. Il choisira également en conséquence la puissance du laser à utiliser qui peut être du type continu ou pulsé, ainsi que sa vitesse de déplacement. La largeur de la bague 6 sera de préférence au moins égale à l'épaisseur de la partie de raccordement 4 pour que la bague 6 puisse enserrer toute la largeur de sa circonférence 4a.

Le soudage pourrait être limité aux seules portions de la ligne de soudage 9 qui correspondent aux lamelles 2 et donc en ne soudant pas le cas échéant la bague 6 sur la partie de raccordement 4 aux endroits où il n'y a pas de lamelle 2 interposée. Mais dans les faits il est plus simple d'effectuer le soudage tout le long de la ligne de soudage 9 autour de la circonférence extérieure de la bague 6, ce qui a en outre pour avantage de solidariser de façon plus solide et fiable la bague 6 avec la partie de raccordement 4.

Il est précisé que les lamelles 2 peuvent éventuellement se chevaucher sur la circonférence de la partie de raccordement 4 dès lors que le serrage de la bague 6 assure le plaquage de l'ensemble des lamelles contre la partie de raccordement 4 pour permettre le soudage au laser par transparence. Dans ce cas, lors du soudage au laser par transparence, le faisceau laser attaquera au fur et à mesure les lamelles 2 superposées jusqu'à atteindre la borne 3. L'homme du métier choisira le cas échéant une matière métallique suffisamment malléable pour la bague 6 pour pouvoir plaquer effectivement l'ensemble des lamelles 2 sur la borne 3 dans le cas où le nombre de lamelles 2 se chevauchant varie suivant la position sur la circonférence 4a de la partie de raccordement 4, c'est-à-dire que l'épaisseur résultante des lamelles 2 autour de la partie de raccordement 4 n'est pas constante.

Les lamelles 2 s'arrêtent de préférence à ras avec le bord de la circonférence de la partie de raccordement 4 du côté du plot de connexion 5 comme illustré sur les figures 2 et 3, en les coupant si nécessaire à un moment quelconque avant, pendant ou après la mise en oeuvre des opérations de raccordement précédemment décrites.

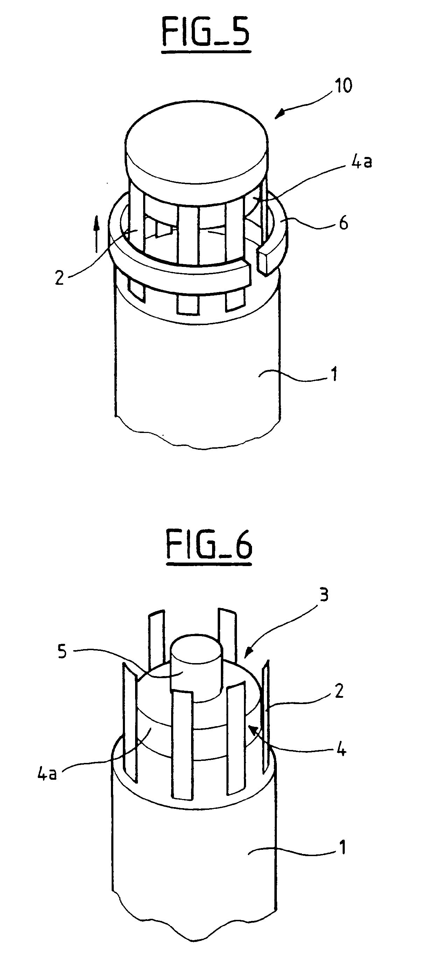

Les figures 4 et 5 illustrent un deuxième mode de réalisation présenté à titre d'explication de l'invention mais non couvert par l'invention qui est une variante du premier mode de réalisation non couvert par l'invention.

L'ensemble des éléments comprenant l'électrode 1, les lamelles 2 et la bague 6 sont identiques à ceux du premier mode de réalisation et portent les mêmes références. Seule la borne de sortie de courant est différente et est maintenant référencée 10. La borne 10 comprend une partie de raccordement 4 qui sera habituellement située à l'intérieur du boîtier du générateur. La partie de raccordement 4 est identique à celle de la borne 3 dans le premier mode de réalisation et a la même fonction de raccordement des lamelles 2 provenant de l'électrode 1. La borne 10 comprend un couvercle de connexion 11 qui sera habituellement disposé du côté extérieur au boîtier du générateur, non représenté, et qui permet la liaison électrique du générateur avec l'application extérieure comme le plot de connexion 5 dans le premier mode de réalisation. Le couvercle 11 a une section circulaire et est solidaire de la partie de raccordement 4 avec laquelle il est coaxial. Le couvercle 11 a un diamètre supérieur à celui de la partie de raccordement 4 et dépasse donc radialement de la circonférence de la partie de raccordement 4.

De la même manière que dans le premier mode de réalisation, les lamelles 2 sont rassemblées entre la bague 6 et la circonférence 4a de la partie de raccordement 4 avec la bague 6 enserrant la circonférence 4a de la partie de raccordement 4 pour permettre le soudage au laser par transparence le long d'une ligne de soudage autour de la circonférence extérieure de la bague 6. Mais dans le cas où le diamètre du couvercle 11 est trop important pour pouvoir être passé au travers de la bague 6 afin d'agencer la bague 6 autour de la partie de raccordement 4, on modifiera le mode opératoire décrit pour le premier mode de réalisation comme suit. D'abord, l'on place la bague 6 autour des lamelles 2 comme illustré sur la figure 4. Ensuite, l'on place la borne 10 sur les extrémités des lamelles 2 de façon à ce que le couvercle 11 soit situé du côté opposé à l'électrode 1 et que les lamelles 2 soient disposées autour de la circonférence 4a de la partie de raccordement 4 comme illustré sur la figure 5. Puis, l'on déplace la bague 6 autour de la circonférence 4a de la partie de raccordement 4. Une fois placée autour de la circonférence 4a de la partie de raccordement 4, on serre la bague 6 sur la circonférence 4a de la partie de raccordement 4 et les lamelles 2 situées entre elles, pour ensuite procéder au soudage au laser par transparence, de la même manière que pour le premier mode de réalisation.

Les lamelles 2 s'arrêtent de préférence à ras avec le bord de la circonférence 4a de la partie de raccordement 4 du côté du couvercle 10 comme illustré sur la figure 5, en les coupant le cas échéant de préférence avant la mise en oeuvre des opérations de raccordement précédemment décrites. Les lamelles 2 peuvent aussi s'arrêter à ras le long du bord de la circonférence extérieure de la bague 6 du côté du couvercle10 en les coupant après la mise en place et le serrage de la bague 6 autour de la partie de raccordement 4. En variante, les lamelles 2 peuvent aussi être coupées à ras le long du bord de la circonférence du couvercle 10 du côté de la bague 6 en les coupant après la mise en place et le serrage de la bague 6 autour de la partie de raccordement 4.

Les figures 6, 7 et 8 représentent un troisième mode de réalisation de l'invention qui est une variante du premier mode de réalisation non couvert par l'invention.

L'ensemble des éléments comprenant l'électrode 1, les lamelles 2 et la borne 3 sont identiques à ceux du premier mode de réalisation et portent les mêmes références. En revanche, la bague 6 est remplacée par un élément de maintien sous forme d'une rondelle 12. Le raccordement des lamelles 2 à la borne 3 est réalisé comme suit.

Dans un premier temps, on positionne la borne 3 entre les lamelles 2 de l'électrode 1 avec le plot de connexion 5 situé du côté opposé à l'électrode 1. La borne 3 est positionnée de telle façon que les lamelles dépassent de la circonférence 4a de la partie de raccordement 4 pour s'étendre du côté du plot de connexion 5, comme l'illustre la figure 6.

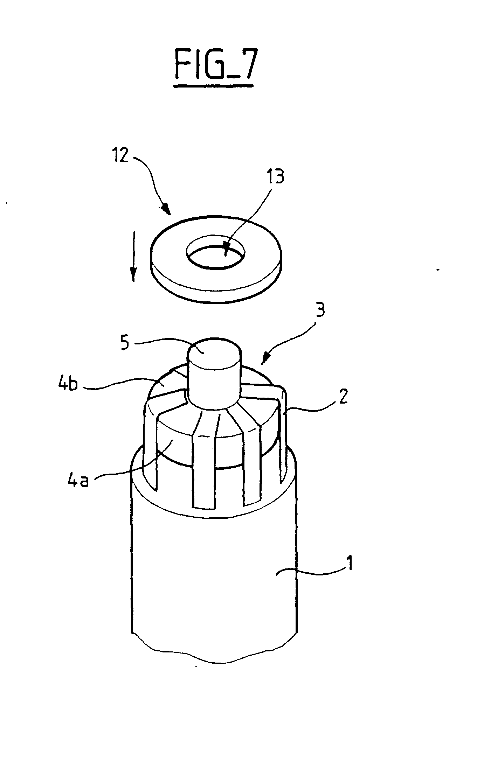

Dans un deuxième temps, on rabat la partie des lamelles 2 qui dépasse de la partie de raccordement 4 sur la face 4b de la partie de raccordement 4 du côté du plot de connexion 5, comme l'illustre la figure 7. Les lamelles 2 s'étendent de préférence que sur la face 4b sans remonter le long du plot de connexion 5, au besoin en les coupant à un moment quelconque avant, pendant ou après la mise en oeuvre des opérations de raccordement en cours de description. Le rabattement des lamelles 2 sur la face 4b pourra se faire par exemple au moyen d'un outil comprenant trois à six branches se déplaçant de façon concentrique de l'extérieur de la borne 3 vers l'axe de celle-ci.

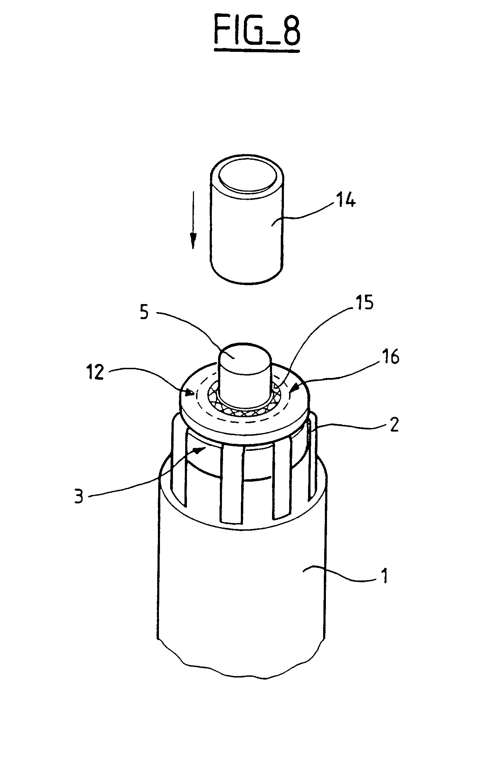

Dans un troisième temps, l'on place la rondelle 12 sur la face 4b de la partie de raccordement 4 de façon à ce que les lamelles 2 soient disposées entre la face 4b et la rondelle 12, comme l'illustrent les figures 7 et 8. Pour cela, la rondelle 12 présente une ouverture 13 correspondant à la section transversale du plot de connexion 5. Dans l'exemple illustré, le plot de connexion présente une section transversale circulaire et coaxiale à la partie de raccordement 4. De façon à correspondre à la borne 3, la rondelle 12 est avantageusement circulaire de diamètre extérieur correspondant à celui de la partie de raccordement 4 et l'ouverture 13 est également circulaire et coaxiale à la circonférence extérieure du plot de connexion 5.

La rondelle 12 est ensuite appuyée contre la face 4b de la partie de raccordement 4 à l'aide par exemple d'un outil cylindrique creux 14 prenant appui sur la rondelle 12 autour du plot de connexion 5. La zone d'appui de l'outil 14 sur la face 4b est représentée hachurée et référencée 15. Durant cette opération, la face opposée à la face 4b de la partie de raccordement 4 pourra par exemple appuyer contre le mandrin de l'électrode 1 ou être soutenu par un outillage adapté tel qu'une tige filetée vissée dans un taraudage de connexion, non représenté, agencé dans le plot de connexion 5. En conséquence, les lamelles 2 sont pincées entre la face 4b de la partie de raccordement 4 et la rondelle 12.

Après la mise en place et le serrage de la rondelle 12 sur la face 4b de la partie de raccordement 4, l'on procède au soudage des lamelles 2 sur la face 4b de la partie de raccordement 4 de manière similaire au premier mode de réalisation, mais sur la face de la rondelle 12. Le soudage est effectué au laser par transparence au travers de la rondelle 12 le long d'une ligne de soudage 16, autour du plot de connexion 5, qui est représentée en pointillés sur la figure 8. Durant l'opération de soudage, on continue à maintenir la rondelle 12 serrée contre la face 4b de la partie de raccordement 4 à l'aide de l'outil 14. De ce fait, la ligne de soudage 16 se situe sur la face de la rondelle 12 en-dehors de la zone 15 sur laquelle appuie l'outil 14. Le soudage au laser se fait par transparence, c'est-à-dire que le faisceau laser attaque en un point de la ligne de soudage 16 sur la face de la rondelle 12 qui est opposée à la face 4b de la borne 3 et fait progressivement fondre d'abord l'épaisseur de matière de la rondelle 12, puis la matière des lamelles 2 et enfin au moins la matière en surface de la face 4b de la partie de raccordement 4, pour souder ensemble ces différents éléments. Le faisceau laser parcourt progressivement la ligne de soudage 16 pour réaliser la soudure tout le long de celle-ci. Lorsque le soudage est fini et que la soudure résultante est suffisamment refroidie, l'on peut enlever l'outil 14 puisque la soudure assure le maintien en place définitif de la rondelle 12 et des lamelles 2 sur la face 4b de la partie de raccordement 4.

Le soudage pourrait être limité aux seules portions de la ligne de soudage 16 qui correspondent aux lamelles 2 et donc en ne soudant pas le cas échéant la rondelle 12 sur la partie de raccordement 4 aux endroits où il n'y a pas de lamelle 2 interposée. Mais dans les faits il est plus simple d'effectuer le soudage tout le long de la ligne de soudage 16 autour du plot de connexion 5, ce qui a en outre pour avantage de solidariser de façon solide et fiable la rondelle 12 avec la partie de raccordement 4.

L'homme du métier choisira les matériaux des lamelles 2, de la borne 3 et de la rondelle 12, ainsi qu'une épaisseur de matière adéquate des lamelles 2 et de la rondelle 12 dans la zone de la ligne de soudage 16 pour permettre le soudage au laser par transparence. Il choisira également en conséquence la puissance du laser à utiliser, qui peut être du type continu ou pulsé. Le diamètre de la rondelle 12 sera de préférence au moins égal au diamètre de la partie de raccordement 4 pour que la rondelle 12 puisse enserrer toute la face4b de la partie de raccordement 4.

Dans ce troisième mode de réalisation, les lamelles 2 peuvent aussi se chevaucher sur la face 4b de la partie de raccordement 4 dès lors que l'effort de serrage appliqué sur la rondelle 12 assure le plaquage de l'ensemble des lamelles 2 contre la face 4b de la partie de raccordement 4 pour permettre le soudage au laser par transparence. Dans ce cas, les lamelles 2 seront soudées entre elles au niveau des parties qui se chevauchent. L'homme du métier choisira le cas échéant une matière métallique suffisamment malléable pour la rondelle 12 si le nombre de lamelles 2 se chevauchant varie suivant la position sur la face 4b de la partie de raccordement 4, c'est-à-dire que l'épaisseur résultante des lamelles 2 autour de la partie de raccordement 4 n'est pas constante.

Nous donnons ci-dessous un exemple de dimensionnement et de choix de matériaux pouvant être appliqué aux trois modes de réalisation précédemment décrits.

Les lamelles 2, la borne 3 ou 10 et la bague 6 ou la rondelle 12 sont de préférence réalisées dans des matériaux métalliques compatibles d'un point de vue électrochimique. En outre, le matériau de la bague 6 ou de la rondelle 12 est choisi compatible avec le soudage au laser par transparence au travers de celle-ci, compte tenu de son épaisseur, c'est-à-dire un matériau réfléchissant peu ou pas le faisceau laser de soudage. Ainsi, s'il s'agit de la borne et des lamelles d'une électrode positive, elles seront toutes les trois avantageusement en aluminium. S'il s'agit de la borne et des lamelles d'une électrode négative, les lamelles et la borne seront de préférence en nickel, en cuivre ou en cuivre nickelé alors que la bague 6 ou la rondelle 12 sera de préférence en nickel ou cuivre nickelé qui assurent une meilleure transparence au soudage par laser - c'est-à-dire une réflexion plus faible du faisceau laser - que le cuivre.

Les lamelles 2 ont de préférence une épaisseur comprise entre 50µm (50 micromètres) et 80µm (80 micromètres), ce qui permet d'obtenir un particulièrement bon soudage au laser par transparence. L'épaisseur de la bague 6 ou de la rondelle 12 dans la zone de la ligne de soudage 9 ou 16 est comprise de préférence entre 0,5mm et 1mm. Les lamelles 2 ont généralement une largeur comprise entre 2mm et 10mm.

Pour les deux premiers modes de réalisation, le diamètre de la partie de raccordement 4 est par exemple compris entre 25mm et 50mm et son épaisseur est avantageusement au moins égale à 4mm. Pour le troisième mode de réalisation, le diamètre de la partie de raccordement 4 est par exemple compris entre 30mm et 50mm et le diamètre du plot de connexion 5 est par exemple compris entre 8mm et 15mm.

La pression de plaquage moyenne de la bague 6 ou de la rondelle 12 contre la partie de raccordement 4 - les lamelles 2 étant pincées entre elles - pendant le soudage au laser par transparence, est de préférence compris 30N/cm² et 60N/cm². Cette indication est donnée en admettant de manière théorique une répartition uniforme des efforts de la bague 6 ou de la rondelle 12 sur la partie de raccordement 4. Ainsi, pour le troisième mode de réalisation, l'effort de serrage appliqué sur la rondelle 12 avec l'outil 14 pourra être avantageusement compris entre 150N et 200N pour une rondelle 12 présentant un diamètre extérieur de 30mm correspondant à celui de la partie de raccordement 4 et dont l'ouverture 13 a un diamètre de 15mm.

Le soudage pourra par exemple être réalisé avec un laser continu YAG d'une puissance d'environ 2000W pour une épaisseur de bague 6 ou de rondelle 12 de 0,5mm et une superposition de cinq lamelles 2 les unes sur les autres au niveau de la partie de raccordement 4, en adoptant une vitesse de déplacement du faisceau laser de l'ordre de 10m/min.

Le soudage au laser par transparence permet d'obtenir un raccordement mécanique solide et fiable des lamelles 2 à la borne 3 - renforcé en outre par la soudure de la bague 6 ou la rondelle 12 sur l'ensemble lamelles/ borne - ainsi qu'un raccordement électrique de grande qualité. Le troisième mode de réalisation présente encore l'avantage de simplifier la mise en place et le plaquage des lamelles 2 sur la partie de raccordement 4 de la borne 3 en recourant à un outillage plus simple et permettant une mise en oeuvre plus rapide, et donc plus économique, de ces opérations. De plus, la pièce de plaquage des lamelles 2 contre la partie de raccordement 4 se résume à une simple rondelle très peu onéreuse.

Bien entendu, la présente invention n'est pas limitée aux exemples et aux modes de réalisation décrits et représentés, mais elle est susceptible de nombreuses variantes accessibles à l'homme de l'art. En particulier, l'invention peut être appliquée à un générateur électrochimique d'un type autre que rechargeable. Par ailleurs, il est clair que l'élément de maintien n'assure plus la fonction de maintien des lamelles contre la borne après son soudage avec les lamelles sur la borne ; c'est alors la soudure résultante qui maintient les lamelles sur la borne. Néanmoins on a continué à le désigner par ces mêmes termes - c'est-à-dire par élément de maintien - après la réalisation du soudage, aussi bien dans la description que dans les revendications.

## Revendications

1. Procédé de raccordement de lamelles (2) d'une électrode (1) à une borne (3) d'un générateur électrochimique, ladite borne présentant une partie plane (4b) et une partie cylindrique (4a) sur une face de laquelle est agencée la partie plane, comprenant:
- le rabattement des lamelles sur la partie plane à partir d'un bord périphérique de la partie plane,
- le pincement des lamelles entre une rondelle (12) et la partie plane de la borne, et
- le soudage (16) des lamelles sur la partie plane de la borne par soudage au laser par transparence au travers de la rondelle, le soudage maintenant ensemble la rondelle, les lamelles et la borne.

2. Procédé selon la revendication 1, **caractérisé en ce que** les lamelles (2) ont chacune une épaisseur comprise entre 50µm et 80µm.

3. Procédé selon l'une des revendications 1 et 2, **caractérisé en ce que** la rondelle (12) a une épaisseur comprise entre 0,5mm et 1mm.

4. Procédé selon l'une des revendications 1 à 3, **caractérisé en ce que** la borne (3), les lamelles (2) et la rondelle (12) sont réalisées en aluminium.

5. Procédé selon l'une des revendications 1 à 3, **caractérisé en ce que** la borne (3) et les lamelles (2) sont réalisées chacun dans un matériau choisi parmi le cuivre, le cuivre nickelé et le nickel et que la rondelle (12) est réalisée en nickel ou en cuivre nickelé.

6. Générateur électrochimique, dans lequel :
- une borne (3) présente une partie plane (4b) et une partie cylindrique (4a) sur une face de laquelle est agencée la partie plane,
- des lamelles (2) provenant d'une électrode (1) sont disposées entre la partie plane de la borne et une rondelle (12),
- les lamelles sont rabattues sur la partie plane à partir d'un bord périphérique de la partie plane, et
comprenant au moins une soudure (16) située sur la partie plane de la borne, traversant la rondelle et les lamelles et pénétrant dans la borne, laquelle soudure est obtenue par soudage au laser par transparence et maintient ensemble la rondelle, les lamelles et la borne.

7. Générateur électrochimique selon la revendication 6, **caractérisé en ce que** les lamelles (2) ont chacune une épaisseur comprise entre 50µm et 80µm.

8. Générateur électrochimique selon l'une des revendications 6 et 7, **caractérisé en ce que** la rondelle (12) a une épaisseur comprise entre 0,5mm et 1mm.

9. Générateur électrochimique selon l'une des revendications 6 à 8, **caractérisé en ce que** la borne (3), les lamelles (2) et la rondelle (12) sont réalisées en aluminium.

10. Générateur électrochimique selon l'une des revendications 6 à 8, **caractérisé en ce que** la borne (3) et les lamelles (2) sont réalisées chacun dans un matériau choisi parmi le cuivre, le cuivre nickelé et le nickel et que la rondelle (12) est réalisée en nickel ou en cuivre nickelé.

## Patentansprüche

1. Verfahren zum Anschließen von Fahnen (2) einer Elektrode (1) an einen Pol (3) eines elektrochemischen Generators, wobei der Pol einen ebenen Teil (4b) und einen zylindrischen Teil (4a), auf dessen einer Stirnseite der ebene Teil angeordnet ist, aufweist, umfassend:
- das Umbiegen der Fahnen auf den ebenen Teil von einem Umfangsrand des ebenen Teils aus,
- das Festklemmen der Fahnen zwischen einer Scheibe (12) und dem ebenen Teil des Pols,
- das Anschweißen (16) der Fahnen an den ebenen Teil des Pols mittels Laser-Transparenzschweißen durch die Scheibe hindurch, wobei die Schweißung die Scheibe, die Fahnen und den Pol zusammenhält.

2. Verfahren nach Anspruch 1, **dadurch gekennzeichnet, dass** die Fahnen (2) jeweils eine Dicke zwischen 50 µm und 80 µm aufweisen.

3. Verfahren nach einem der Ansprüche 1 und 2, **dadurch gekennzeichnet, dass** die Scheibe (12) eine Dicke zwischen 0,5 mm und 1 mm aufweist.

4. Verfahren nach einem der Ansprüche 1 bis 3, **dadurch gekennzeichnet, dass** der Pol (3), die Fahnen (2) und die Scheibe (12) aus Aluminium hergestellt sind.

5. Verfahren nach einem der Ansprüche 1 bis 3, **dadurch gekennzeichnet, dass** der Pol (3) und die Fahnen (2) jeweils aus einem Material hergestellt sind, das aus Kupfer, vernickeltem Kupfer und Nickel ausgewählt ist, und dass die Scheibe (12) aus Nickel oder aus vernickeltem Kupfer hergestellt ist.

6. Elektrochemischer Generator, in welchem:
- ein Pol (3) einen ebenen Teil (4b) und einen zylindrischen Teil (4a), auf dessen einer Stirnseite der ebene Teil angeordnet ist, aufweist,
- Fahnen (2), die zu einer Elektrode (1) gehören, zwischen dem ebenen Teil des Pols und einer Scheibe (12) angeordnet sind,
- die Fahnen von einem Umfangsrand des ebenen Teils aus auf den ebenen Teil umgebogen sind, und
welcher wenigstens eine auf dem ebenen Teil des Pols befindliche Schweißverbindung (16) umfasst, welche die Scheibe und die Fahnen durchquert und in den Pol eindringt, wobei diese Schweißverbindung mittels Laser-Transparenzschweißen erhalten wird und die Scheibe, die Fahnen und den Pol zusammenhält.

7. Elektrochemischer Generator nach Anspruch 6, **dadurch gekennzeichnet, dass** die Fahnen (2) jeweils eine Dicke zwischen 50 µm und 80 µm aufweisen.

8. Elektrochemischer Generator nach einem der Ansprüche 6 und 7, **dadurch gekennzeichnet, dass** die Scheibe (12) eine Dicke zwischen 0,5 mm und 1 mm aufweist.

9. Elektrochemischer Generator nach einem der Ansprüche 6 bis 8, **dadurch gekennzeichnet, dass** der Pol (3), die Fahnen (2) und die Scheibe (12) aus Aluminium hergestellt sind.

10. Elektrochemischer Generator nach einem der Ansprüche 6 bis 8, **dadurch gekennzeichnet, dass** der Pol (3) und die Fahnen (2) jeweils aus einem Material hergestellt sind, das aus Kupfer, vernickeltem Kupfer und Nickel ausgewählt ist, und dass die Scheibe (12) aus Nickel oder aus vernickeltem Kupfer hergestellt ist.

## Claims

1. A method of connecting plates (2) of an electrode (1) to a terminal (3) of a storage cell, said terminal having a flat portion (4b) and a cylindrical portion (4a) on one face of which the flat portion is arranged, comprising:
- bending the plates over onto the flat portion starting from a peripheral edge of the flat portion,
- clamping said plates between a washer-like member (12) and the flat portion of said terminal, and
- welding (16) said plates onto the flat portion of the terminal using transparent laser welding through said washer-like member, the welding holding the washer-like member, the plates and the terminal together.

2. The method claimed in claim 1 **characterized in that** said plates (2) are each from 50 µm to 80 µm thick.

3. The method according to any one of claims 1 or 2, **characterized in that** said washer-like member (12) is from 0.5 mm to 1 mm thick.

4. The method according to any one of claims 1 to 3, **characterized in that** said terminal (3), said plates (2) and said washer-like member (12) are made of aluminum.

5. The method according to any one of claims 1 to 3, **characterized in that** said terminal (3) and said plates (2) are each made from a material chosen from copper, nickel-plated copper and nickel and said washer-like member (12) is made from nickel or nickel-plated copper.

6. A storage cell in which:
- a terminal (3) has a flat portion (4b) and a cylindrical portion (4a) on one face of which the flat portion is arranged,
- plates (2) leaving an electrode (1) are disposed between the flat portion of the terminal and a washer-like member (12),
the plates are bent over onto the flat portion starting from a peripheral edge of the flat portion, and
including at least one weld (16) located on the flat portion of the terminal, passing through said washer-like member and said plates and penetrating said terminal, said weld being obtained by transparent laser welding and holding the washer-like member, the plates and the terminal together.

7. The cell claimed in claim 6, **characterized in that** said plates (2) are each from 50 µm to 80 µm thick.

8. The cell claimed in any one of claims 6 and 7, **characterized in that** said washer-like member (12) is from 0.5 mm to 1 mm thick.

9. The cell claimed in any one of claims 6 to 8, **characterized in that** said terminal (3), said plates (2) and said washer-like member (12) are made of aluminum.

10. The cell claimed in any one of claims 6 to 8, **characterized in that** said terminal (3) and said plates (2) are each made from a material chosen from copper, nickel-plated copper and nickel and said washer-like member (12) is made from nickel or nickel-plated copper.
